# EUROPEAN PATENT APPLICATION

(11) **EP 4 831 471 A1**
(43) Date of publication of application: **28.10.2026**
(21) Application number: 26173849.6
(22) Date of filing: 22.04.2026
(51) Int. Cl.: F02D 41/00, F02M 26/20, F02M 26/44, F02D 41/20

(54) **EGR CONTROL DEVICE AND PROGRAM FOR INTERNAL COMBUSTION ENGINE**

(30) Priority: 25.04.2025 JP 2025073561
(71) Applicant: DENSO CORPORATION, Kariya-city, Aichi-pref., 448-8661 (JP)
(72) Inventor: OSAKI, Satoru, Kariya-city, Aichi-pref., 448-8661 (JP)
(74) Representative: Kuhnen & Wacker Patent- und Rechtsanwaltsbüro PartG mbB

(57) **Abstract**

An EGR system includes an EGR passage (41a) recirculating a part of exhaust gas discharged from a combustion chamber (16) of each cylinder in an internal combustion engine (11) to a branch intake passage (24a) provided for each cylinder, and an EGR valve (42) adjusting an amount of an EGR gas flowing through the EGR passage. An ECU (50) includes a target EGR flow rate calculation unit (52) calculating a target value of an EGR gas flow rate of the EGR gas flowing into the cylinder as a target EGR flow rate based on an operating state of the internal combustion engine, and an EGR control unit (53) controlling an opening degree of the EGR valve (42) based on the target EGR flow rate. The target EGR flow rate calculation unit (52) includes a change rate limiting unit (63) that imposes a limit on a change rate of the target EGR flow rate. In such manner, the EGR system is capable of performing appropriate EGR control even when the EGR gas flow rate fluctuates.

## Description

The present disclosure relates to an EGR control device and program for an internal combustion engine.

In an internal combustion engine, an EGR (exhaust gas recirculation) system is known in which EGR gas, which is a part of the exhaust gas, is recirculated to a surge tank, which is a collection part upstream of an intake manifold, or to an upstream side of the surge tank. In addition, a technique for controlling the EGR gas flow rate is known in which a target EGR gas flow rate is calculated based on an operating state of the internal combustion engine, and a target opening degree of an EGR valve is controlled so that the target EGR gas flow rate is achieved (for example, Japanese Patent No. 7191182).

In the above-described EGR system, the EGR gas flows into a surge tank on the intake side and then flows into each cylinder through branch pipes. Therefore, for example, when the throttle valve steeply closes during deceleration of the vehicle, it may take time to reduce the amount of EGR gas in the intake manifold in response to a decrease in the amount of fresh air in the intake manifold. In such case, a state in which the proportion of EGR gas is relatively high continues, and there is a concern that misfires may occur. As a countermeasure against such misfires, it has been necessary to set the target EGR gas flow rate to a low value with a margin even during steady state operation so as to prevent misfires during deceleration.

On the other hand, in recent years, in order to alleviate the above-mentioned inconveniences and achieve further improvements in fuel economy, it has been proposed to adopt a tournament-type EGR system. The tournament-type EGR system is a system in which EGR gas flows directly into intake passages (for example, intake ports) that branch off for each cylinder, rather than into an intake air collection unit such as a surge tank. In such system, there is no large volume surge tank as a route for the EGR gas after it is recirculated to the intake side, thereby the EGR flow rate regarding the gas taken into the cylinder quickly follows the opening and closing operation of the EGR valve. Quick following of the EGR flow rate makes it possible to reduce the margin for misfire during deceleration as described above, thereby enabling a higher EGR rate and improved fuel economy.

However, when applying existing EGR control to a tournament-type EGR system, when the EGR gas flow rate steeply increases, a phenomenon occurs in which the amount of air flowing into the cylinder (cylinder inflow air flow rate) temporarily decreases due to the inflow of EGR gas into the branch intake passages of each cylinder. Therefore, there is a concern that engine torque may temporarily decrease. The reason for such phenomenon is that the steeply increased EGR gas flow rate flows directly into the cylinder, occupying part of the volume within the cylinder. In such case, the inflow of air is obstructed, causing a temporary drop in the flow rate of air into the cylinder. When the EGR gas flow rate steeply decreases, there is a concern that, contrary to the above, the engine torque may temporarily increase due to a temporary increase in the cylinder inflow air flow rate. These inconveniences are new issues that arise when a tournament-type EGR system is adopted, and it is considered that there is room for improvement.

The present disclosure has been made in consideration of the above circumstances, and it is an object of the present disclosure to provide an EGR control device and program for an internal combustion engine that can perform an appropriate EGR control even when an EGR gas flow rate fluctuates in an EGR system that recirculates EGR gas to branch intake passage of each cylinder.

An EGR control device according to the present disclosure is applicable to an EGR system for an internal combustion engine. The EGR system includes i) an EGR passage configured to recirculate a part of exhaust gas, which is discharged from a combustion chamber of each of multiple cylinders in the internal combustion engine, to a branch intake passage provided for each of the cylinders and communicating with the combustion chamber, and ii) an EGR valve configured to adjust an amount of EGR gas flowing through the EGR passage. The EGR control device comprises: a target EGR flow rate calculation unit configured to calculate, as a target EGR flow rate, a target value of an EGR gas flow rate of EGR gas flowing into the cylinders based on an operating state of the internal combustion engine; and an EGR control unit configured to control an opening degree of the EGR valve based on the target EGR flow rate. The target EGR flow rate calculation unit includes a change rate limiting unit configured to limit a change rate of the target EGR flow rate.

In an internal combustion engine, in an EGR system that recirculates EGR gas, which is a part of the exhaust gas discharged from the combustion chamber, to the branch intake passage of each cylinder (the intake port or the branched part of the intake manifold), there is a concern that when the opening degree of the EGR valve changes, the amount of air flowing into the cylinder changes steeply, causing temporary torque fluctuations. In this regard, according to the above-described configuration, a limit is imposed on the rate of change of the target EGR flow rate calculated based on the operating state of the internal combustion engine. Then, the opening degree of the EGR valve is controlled based on the target EGR flow rate whose change rate is limited. In such manner, a steep change in the amount of air flowing into the cylinder is suppressed, thereby suppressing torque fluctuations. As a result, in an EGR system in which EGR gas is recirculated to the branch intake passage of each cylinder, appropriate EGR control can be achieved even when the EGR gas flow rate fluctuates.
FIG. 1 is a diagram of an outline of an EGR system for an in-vehicle engine.
FIG. 2 is a time chart of a change in the cylinder inflow air flow rate when the target EGR flow rate is changed.
FIG. 3 is a graph of a relationship between torque fluctuation amount and g(x).
FIG. 4 is a diagram of a relationship between an engine speed Ne and an allowable fluctuation value Δmcylmax.
FIG. 5 is a diagram of a relationship between a reduction ratio and an allowable torque fluctuation value Δtrqmax.
FIG. 6 is a flowchart of a procedure for EGR control.
FIG. 7 is a diagram of the relationship between the engine speed Ne and the allowable fluctuation value Δmcylmax.
FIG. 8 is a flowchart of a procedure for EGR control according to a second embodiment.
FIG. 9 is a diagram of the configuration of an ECU according to a third embodiment.
FIG. 10 is a diagram of the relationship between engine speed Ne and filling delay time constant τ.
FIG. 11 is a flowchart of a processing procedure of EGR control according to the third embodiment.
FIG. 12 is a flowchart of a procedure for EGR control according to a first modified example.
FIG. 13 is a flowchart of a procedure for EGR control according to a second modified example.
FIG. 14 is a flowchart of a procedure for EGR control according to a third modified example.
FIG. 15 is a flowchart of a procedure for EGR control according to a fourth modified example.
FIG. 16 is a diagram of configuration of an ECU according to fifth to tenth modified examples.
FIG. 17 is a flowchart of a procedure for EGR control according to the fifth modified example.
FIG. 18 is a flowchart of a procedure for EGR control according to the sixth modified example.
FIG. 19 is a flowchart of a procedure for EGR control according to the seventh modified example.
FIG. 20 is a flowchart of a procedure for EGR control according to the eighth modified example.
FIG. 21 is a flowchart of a processing procedure for EGR control according to the ninth modified example.
FIG. 22 is a flowchart of a procedure for EGR control according to the tenth modified example.
FIG. 23 is a diagram of an outline of an EGR system according to a modified example.

Embodiments of the present disclosure are described based on the drawings.

### (First Embodiment)

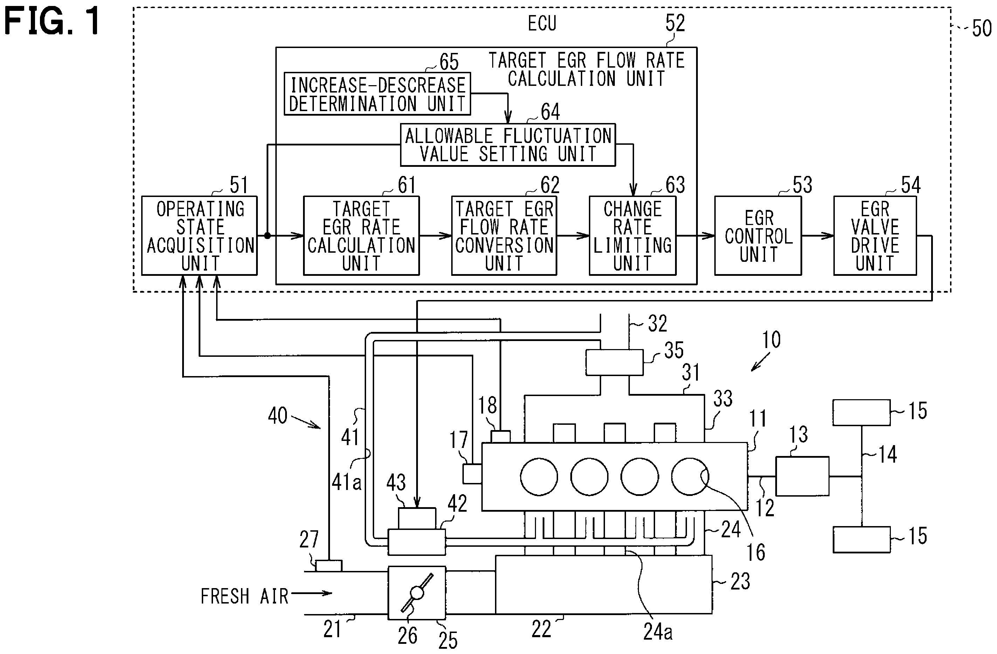

Hereinafter, specific embodiments of an EGR control device according to the present disclosure will be described with reference to the drawings. In the present embodiment, EGR control is performed in a multi-cylinder four-stroke gasoline engine (internal combustion engine) mounted on a vehicle. First, the overall configuration of an EGR system for an in-vehicle engine will be described with reference to FIG. 1.

As shown in FIG. 1, a vehicle 10 includes an engine 11, a transmission 13 connected to an output shaft 12 of the engine 11, and wheels 15 connected to the output side of the transmission 13 via a drive shaft 14 or the like. The transmission 13 is a multi-speed transmission or a continuously variable transmission, and a reduction ratio can be changed by manual or automatic operation.

The engine 11 is, for example, a four-cylinder engine, and each cylinder is provided with a combustion chamber 16. The engine 11 is, for example, a spark-ignition gasoline engine that uses gasoline as fuel. Although not shown as they are well known in the art, the engine 11 is provided with a fuel injection valve and a spark plug for each cylinder. The engine 11 is also provided with an intake valve and an exhaust valve at its intake port and exhaust port, respectively. The engine 11 may be provided with an intake-side valve train that changes the opening and closing timing of the intake valve, and an exhaust-side valve train that changes the opening and closing timing of the exhaust valve. The engine 11 is also provided with a rotation sensor 17 that detects the rotation of the output shaft, and a temperature sensor 18 that detects the temperature of the engine coolant.

An intake pipe 21 and an intake manifold 22 are connected to the intake side of the engine 11. The intake pipe 21 and the intake manifold 22 form an intake passage. The intake manifold 22 has a surge tank 23 as a collection part and multiple branch pipes 24 branching from the surge tank 23. In the intake manifold 22, the surge tank 23 is connected to the intake pipe 21, and the multiple branch pipes 24 are connected to the intake ports of the cylinders of the engine 11, respectively. The intake pipe 21 is provided with a throttle device 25 including a DC motor or the like. The throttle device 25 has a throttle valve 26. By adjusting the opening degree of the throttle valve 26, the amount of air passing through the intake pipe 21 is adjusted. An air flow meter 27 for detecting the amount of intake air is provided in the intake pipe 21 upstream of the throttle device 25.

An exhaust manifold 31 and an exhaust pipe 32 are connected to the exhaust side of the engine 11. The exhaust manifold 31 and the exhaust pipe 32 form an exhaust passage. The exhaust manifold 31 has multiple branch pipes 33, each of which is connected to an exhaust port of each cylinder of the engine 11. The exhaust pipe 32 is connected to a merging part of the exhaust manifold 31. The exhaust pipe 32 is provided with an exhaust purification device 35 for purifying harmful components in the exhaust gas. The exhaust purification device 35 includes, as an exhaust purification catalyst, for example, a three-way catalyst that purifies the three components of CO, HC, and NOx, or a NOx catalyst that purifies NOx in the exhaust gas. Further, the exhaust purification device 35 may also include a gasoline particulate filter (GPF) that collects particulate matter (PM) in the exhaust gas.

The engine 11 is also provided with an EGR device 40 that introduces part of the exhaust gas into the intake side as EGR gas. The EGR device 40 has an EGR pipe 41 that connects the intake side and exhaust side of the engine 11, an EGR valve 42 that adjusts the flow rate of EGR gas flowing through the EGR pipe 41, and an EGR actuator 43 that opens and closes the EGR valve 42. The EGR actuator 43 is, for example, a step motor.

In the present embodiment, a so-called tournament-type EGR system is adopted, in which EGR gas introduced into the EGR pipe 41 from the exhaust side flows into the branch pipe 24 of the intake manifold 22 on the intake side. Specifically, an exhaust side end of the EGR pipe 41 is connected to the downstream side of the exhaust purification device 35 in the exhaust pipe 32. The intake side end of the EGR pipe 41 is branched into a number of pipes corresponding to the number of cylinders, and each of these pipe ends is connected to the branch pipe 24 of the intake manifold 22. The passage in the EGR pipe 41 is an EGR passage 41a, and the passage in the branch pipe 24 of the intake manifold 22 is a branch intake passage 24a.

Note that the intake side end of the EGR pipe 41 may be connected to the branch pipe 24 of the intake manifold 22 or to the intake port of each cylinder of the engine 11. In such case, the intake port of each cylinder corresponds to a branch intake passage. Although not shown, an EGR cooler for cooling the EGR gas may be provided midway along the EGR pipe 41.

An ECU 50 is an electronic control unit equipped with a well-known microcomputer including a CPU as a processor, a ROM, a RAM, a flash memory, and the like. The microcomputer provides various computing functions. The functions provided by the microcomputer can be provided by software recorded in a physical memory device and a computer that executes the software, software alone, hardware alone, or a combination of these. The microcomputer executes a program stored in, for example, a non-transitory, tangible storage medium that serves as a storage unit provided in the microcomputer. The programs include programs for performing various controls in the engine 11. With the execution of the program, a method corresponding to the program is performed. The storage unit is, for example, a non-volatile memory. The program stored in the storage unit may be updated via a network such as the Internet or the like.

The ECU 50 receives detection signals from various sensors including the rotation sensor 17, the temperature sensor 18, and the air flow meter 27, and determines the engine operating state based on the received detection signals. Then, based on the engine operating state, fuel injection by the fuel injection valve, ignition timing by the spark plug, EGR control, etc. are performed.

However, in an EGR system that recirculates EGR gas to the branch pipe 24 (branch intake passage) of the intake manifold 22, when the flow rate of EGR gas increases or decreases as the opening degree of the EGR valve 42 changes, there is a concern that the amount of air flowing into the cylinder may steeply change, resulting in temporary torque fluctuations, or the like.

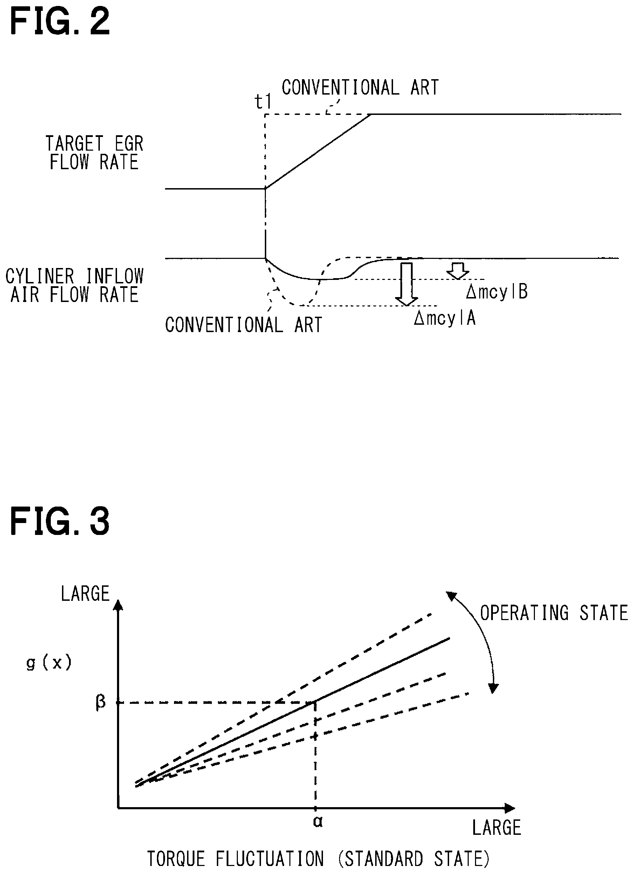

FIG. 2 is a time chart of the change in a cylinder inflow air flow rate when a target EGR flow rate is changed. Here, the target EGR flow rate is a target value of an EGR gas flow rate passing through the EGR valve 42, and the cylinder inflow air flow rate is an amount of air that flows into each cylinder from the air that passes through the throttle valve 26 and flows downstream. In FIG. 2, the change in the cylinder inflow air flow rate relative to the change in the target EGR flow rate in a conventional art is shown by a broken line.

At timing t1 in FIG. 2, the target EGR flow rate increases in accordance with a change in the engine operating state. At such time, the cylinder inflow air flow rate changes steeply as the target EGR flow rate changes, which causes a temporary torque fluctuation. In the conventional art, the fluctuation amount in the cylinder inflow air flow rate that accompanies a change in the target EGR flow rate is ΔmcyIA. In the present embodiment, the change rate of the target EGR flow rate is limited in order to reduce the fluctuation amount in the cylinder inflow air flow rate to "ΔmcyIB." Details thereof will be described below.

The configuration of the ECU 50 regarding EGR control is shown in FIG. 1. The ECU 50 includes an operating state acquisition unit 51, a target EGR flow rate calculation unit 52, an EGR control unit 53, and an EGR valve drive unit 54.

The operating state acquisition unit 51 acquires parameters indicating the operating state of the engine 11. Specifically, the engine speed calculated based on the detection signal of the rotation sensor 17, the intake air amount detected by the air flow meter 27, and the coolant temperature detected by the temperature sensor 18 are acquired. At such time, as load information of the engine 11, a filling efficiency of the engine 11, i.e., mass of air introduced into the cylinder in one intake stroke of the engine 11, divided by a "cylinder volume (volume of the combustion chamber 16) x standard state air density" may be calculated based on an air amount detection signal of the air flow meter 27. Note that the load information may be the intake air amount or the like other than the filling efficiency.

The target EGR flow rate calculation unit 52 includes a target EGR rate calculation unit 61, a target EGR flow rate conversion unit 62, a change rate limiting unit 63, an allowable fluctuation value setting unit 64, and an increase-decrease determination unit 65.

The target EGR rate calculation unit 61 calculates a target value of the EGR rate, which is the ratio of the amount of EGR gas in the cylinder to the total amount of gas in the cylinder, as the target EGR rate, based on the operating state of the engine 11. Specifically, the engine speed and the filling efficiency are used as main parameters, and the target EGR rate is calculated based on the engine speed and the filling efficiency. For example, the target EGR rate may be calculated using a mathematical equation or map that defines the relationship between the engine speed, the filling efficiency, and the target EGR rate.

The target EGR flow rate conversion unit 62 converts the target EGR rate calculated by the target EGR rate calculation unit 61 to calculate a target EGR flow rate base value meb. The target EGR flow rate base value meb is a base value of a target EGR flow rate me when the target value of the flow rate of EGR gas flowing into the cylinder is set to the target EGR flow rate me. At such time, the EGR gas amount of each cylinder corresponding to the EGR rate is converted into the flow rate of EGR gas passing through the EGR valve 42 of the EGR passage 41a, and a target EGR flow rate base value meb is calculated based on such rate.

The change rate limiting unit 63 imposes a limit on the change rate of the target EGR flow rate me. At such time, the change rate is limited by a predetermined limit rate mespdmax with respect to the change in the target EGR flow rate base value meb calculated by the target EGR flow rate conversion unit 62, and the final target EGR flow rate me is calculated based on such limit. The process for limiting the change rate of the target EGR flow rate me will be described in detail below.

The allowable fluctuation value setting unit 64 sets an allowable fluctuation value Δmcylmax, which is an upper limit value for the fluctuation amount in the cylinder inflow air flow rate that accompanies a change in the flow rate of EGR gas. That is, when the EGR gas flow rate changes, the flow rate of air flowing into the cylinder fluctuates in the opposite direction to the increase or decrease in the EGR gas flow rate, and when the amount of such fluctuation becomes excessively large, excessive fluctuations in engine torque occur. Therefore, in the present embodiment, the allowable fluctuation value Δmcylmax is set as the upper limit of the allowable fluctuation of the cylinder inflow air flow rate, and excessive fluctuations in the cylinder inflow air flow rate (excessive engine torque fluctuations) are suppressed by keeping the cylinder inflow air flow rate to be equal to or below the allowable fluctuation value Δmcylmax.

In the present embodiment, the allowable fluctuation value Δmcylmax of the cylinder inflow air flow rate is calculated backward from an allowable torque fluctuation value Δtrqmax, which is an upper limit value of the torque fluctuation amount of the engine 11. Specifically, the allowable fluctuation value setting unit 64 uses the following equation (1) to set the allowable fluctuation value Δmcylmax based on the allowable torque fluctuation value Δtrqmax. $\begin{matrix}Δ mcylmax = f \left(Δtrqmax\right) \times Ncyl \times Ne / \left(2\times 60\right) \\ = g \left(Δtrqmax\div Eff_IG\div Eff_lmd\right) \times Ncyl \times Ne / \left(2\times 60\right)\end{matrix}$ (1)

In equation (1), Ncyl is the number of cylinders of the engine 11, and Ne is the engine speed [rpm].

Also, g(x) is a fresh air mass required to generate a torque of x [Nm] under the condition of λ=1, which is a reference ignition timing for torque calculation, and at the current engine speed Ne. This g(x) is a value per intake stroke and is calculated, for example, by map search or the like. Eff_IG is an ignition efficiency at the actual ignition timing (the ratio of the torque at the actual ignition timing to the torque when ignition is performed at the reference ignition timing for torque calculation). Eff_Imd is a λ efficiency at a target air excess ratio λ (a ratio of torque at the actual target λ to a torque when combustion occurs at λ=1).

g(x) may be calculated based on a relationship shown in FIG. 3, for example. In FIG. 3, the relationship between the torque fluctuation amount of the engine 11 and g(x) is defined in a standard state where Eff_IG = 1.0 and Eff_Imd = 1.0, and an allowable value β of fresh air fluctuation amount is calculated as g(x) based on a value obtained by converting the allowable torque fluctuation value Δtrqmax into the torque fluctuation amount in the standard state (i.e., α, which is "Δtrqmax ÷ Eff_IG ÷ Eff_Imd").

Note that, in FIG. 3, multiple relationships are defined assuming that a torque sensitivity changes depending on the operating state of the engine 11.

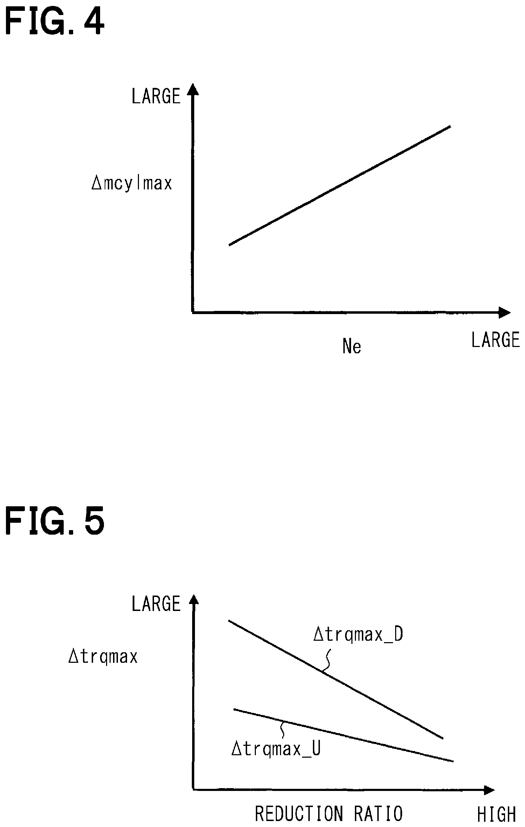

Further, in the above-described equation (1), the allowable fluctuation value Δmcylmax is a value proportional to the engine speed Ne. The allowable fluctuation value Δmcylmax and the engine speed Ne have a relationship such that the greater the engine speed Ne, the greater the allowable fluctuation value Δmcylmax, as shown in FIG. 4, for example.

Further, for example, when the vehicle decelerates, the amount of fresh air decreases as the opening degree of the throttle valve 26 decreases. At such time, in order to avoid misfires in the engine 11, it is undesirable that a reduction rate at which the EGR gas flow rate is reduced is excessively limited (i.e., reduction of gas flow rate is excessively slow). Therefore, in the present embodiment, when it is determined as a situation in which the EGR gas flow rate decreases, the allowable fluctuation value Δmcylmax of the cylinder inflow air flow rate regarding the gas taken into the cylinder is set to a greater value than when it is determined as a situation in which the EGR gas flow rate increases.

The increase-decrease determination unit 65 determines as a situation whether the EGR gas flow rate decreases or increases. Then, when it is determined as a situation in which the EGR gas flow rate decreases, the allowable fluctuation value setting unit 64 sets the allowable torque fluctuation value Δtrqmax to a greater value than when it is determined as a situation in which the EGR gas flow rate increases. That is, the allowable torque fluctuation value Δtrqmax is switched between an increase situation when the EGR flow rate increases and a decrease situation when the EGR flow rate decreases.

Specifically, the current value of the target EGR flow rate base value meb (current meb value) is compared with the previous value of the target EGR flow rate me (previous me value). Then, depending on which of the current meb value and the previous me value is larger, an allowable torque fluctuation value Δtrqmax_D when EGR gas decreases or an allowable torque fluctuation value Δtrqmax_U when EGR gas increases is calculated. In such case,
· When the current meb value ≤ the previous me value, it is determined as a situation in which the EGR gas flow rate decreases, and "Δtrqmax_D" is calculated as the allowable torque fluctuation value.
· When the current meb value is greater than the previous me value, it is determined as a situation in which the EGR gas flow rate increases, and "Δtrqmax_U" is calculated as the allowable torque fluctuation value.

The allowable torque fluctuation values Δtrqmax_D and Δtrqmax_U have a relationship of "Δtrqmax_D > Δtrqmax_U." Therefore, when it is determined as a situation in which the EGR gas flow rate decreases, the allowable torque fluctuation value Δtrqmax is set to a greater value than when it is determined as a situation in which the EGR gas flow rate increases.

Further, in the vehicle 10, it is considered that, even when the fluctuation amount in the engine torque is the same, the greater the reduction ratio of the transmission 13, the greater the fluctuation in axle torque, and the greater the shock felt by the driver. In consideration of such point, it is preferable to calculate the allowable torque fluctuation value Δtrqmax to be a smaller value as the reduction ratio of the transmission 13 increases. Specifically, for example, the allowable torque fluctuation value Δtrqmax may be calculated based on the reduction ratio of the transmission 13 using a relationship shown in FIG. 5.

In FIG. 5, the allowable torque fluctuation value Δtrqmax_D when EGR gas decreases and the allowable torque fluctuation value Δtrqmax_U when EGR gas increases have a relationship in which the higher the reduction ratio of the transmission 13, the smaller the allowable torque fluctuation value Δtrqmax_D becomes. Further, when comparing a gradient (sensitivity) of the allowable torque fluctuation value Δtrqmax with respect to the reduction ratio, the allowable torque fluctuation value Δtrqmax_D when EGR gas decreases is greater than the allowable torque fluctuation value Δtrqmax_U when EGR gas increases.

Note that, instead of the above, the increase or decrease in EGR gas can be determined in the following manner:
· When the current meb value ≤ the previous me value and the difference between them is equal to or greater than a predetermined value, it is determined as a situation in which the EGR gas flow rate decreases, and "Δtrqmax_D" is calculated as the allowable torque fluctuation value, and
· when the current meb value > the previous me value and the difference between them is equal to or greater than a predetermined value, it is determined as a situation in which the EGR gas flow rate increases, and "Δtrqmax_U" is calculated as the allowable torque fluctuation value.

The increase-decrease determination unit 65 can also determine as a situation whether the EGR gas flow rate decreases or increases based on the operating state of the engine 11. For example, when the vehicle 10 is accelerating, it is determined as a situation in which the EGR gas flow rate decreases, and when the engine operating state stabilizes after the vehicle 10 is accelerated, it is determined as a situation in which the EGR gas flow rate increases.

The change rate limiting unit 63 sets a limit rate mespdmax based on the allowable fluctuation value Δmcylmax of the cylinder inflow air flow rate. The limit rate mespdmax is an upper limit rate for limiting the change rate of the EGR gas flow rate. Specifically, the change rate limiting unit 63 uses the following equation (2) to set the limit rate mespdmax based on the allowable fluctuation value Δmcylmax of the cylinder inflow air flow rate. $mespdmax = Δ mcylmax / k$ (2)

In equation (2), k is a predetermined constant. Note that the constant k is preferably set as an intake manifold filling delay time constant under typical engine operating conditions. The intake manifold filling delay time constant is a time constant that indicates the degree of filling delay when air that has passed through the throttle valve 26 fills the intake manifold 22. Alternatively, the constant k may be set as "Δmcyl / mespd," which uses a value set by (i) changing the EGR gas flow rate at a predetermined rate mespd under typical engine operating conditions, and (ii) using the fluctuation amount Δmcyl of the cylinder inflow air flow rate observed at such time.

According to the above-described equation (2), the larger the allowable fluctuation value Δmcylmax of the cylinder inflow air flow rate is, the larger the value to which the limit rate mespdmax is set. That is, the larger the allowable fluctuation value Δmcylmax of the cylinder inflow air flow rate, the smaller the degree of limit on the change rate of the EGR gas flow rate (the upper limit rate becomes larger).

The change rate limiting unit 63 calculates the current value of the target EGR flow rate me by limiting the target EGR flow rate base value meb using the limit rate mespdmax. Specifically, the difference between the current target EGR flow rate base value meb and the previous target EGR flow rate me is calculated as an EGR flow rate difference ΔM, and an absolute value of the EGR flow rate difference ΔM is compared with a difference upper limit value Δmax. The difference upper limit value Δmax is a value obtained by multiplying the limit rate mespdmax by a processing cycle Ts, that is, in other words, the flow rate limit value per processing cycle.

When the absolute value of the EGR flow rate difference ΔM is less than the difference upper limit value Δmax (|ΔM| < Δmax), the current value of the target EGR flow rate base value meb is set as the current value of the target EGR flow rate me. Further, when the absolute value of the EGR flow rate difference ΔM is equal to or greater than the difference upper limit value Δmax (|ΔM| ≥ Δmax), the current value of the target EGR flow rate me is set to a value that is closer to the current value of the target EGR flow rate base value meb by Δmax from the previous value of the target EGR flow rate me.

The EGR control unit 53 controls an opening degree of the EGR valve 42 based on the target EGR flow rate me calculated by the target EGR flow rate calculation unit 52. Here, the EGR control unit 53 calculates the opening degree of the EGR valve 42 or a value correlated to the EGR valve opening degree, as a target state of the EGR valve 42 for achieving the target EGR flow rate me. The values correlated with the EGR valve opening degree include, for example, an opening area of the EGR valve 42 and a motor position of the step motor of the EGR actuator 43. At such time, the target state of the EGR valve 42 (such as the opening degree of the EGR valve 42 or the like) is calculated based on the target EGR flow rate me and a pressure ratio before and after the EGR valve 42. The pressure ratio before and after the EGR valve 42 is a ratio between the pressure on an upstream side of the EGR valve 42 and the pressure on a downstream side of the EGR valve 42 in the EGR passage 41a. The upstream pressure of the EGR valve 42 may be a detected value by a pressure sensor provided in the EGR pipe 41 or an estimated value estimated from the atmospheric pressure, the EGR flow rate, or the like. The downstream pressure of the EGR valve 42 may be a detected value by a pressure sensor provided in the intake manifold 22 or an estimated value based on the air flow rate or the like.

The EGR valve drive unit 54 calculates a drive signal to be applied to the EGR actuator 43 in order to realize the target state of the EGR valve 42, and outputs the drive signal to the EGR actuator 43. In such manner, the opening degree of the EGR valve 42 is adjusted, and the target state of the EGR valve 42 is achieved.

In the above-described configuration, when the target EGR flow rate me changes in response to a change in the engine operating state, the change rate of the target EGR flow rate me is limited. In such manner, an excessive decrease in the amount of air flowing into the cylinder due to a sudden increase in the EGR gas flow rate is suppressible, thereby suppressing torque fluctuations (see FIG. 2). Conversely, when the EGR gas flow rate steeply decreases, an excessive increase in the amount of air flowing into the cylinder is suppressed, and torque fluctuations are also suppressible.

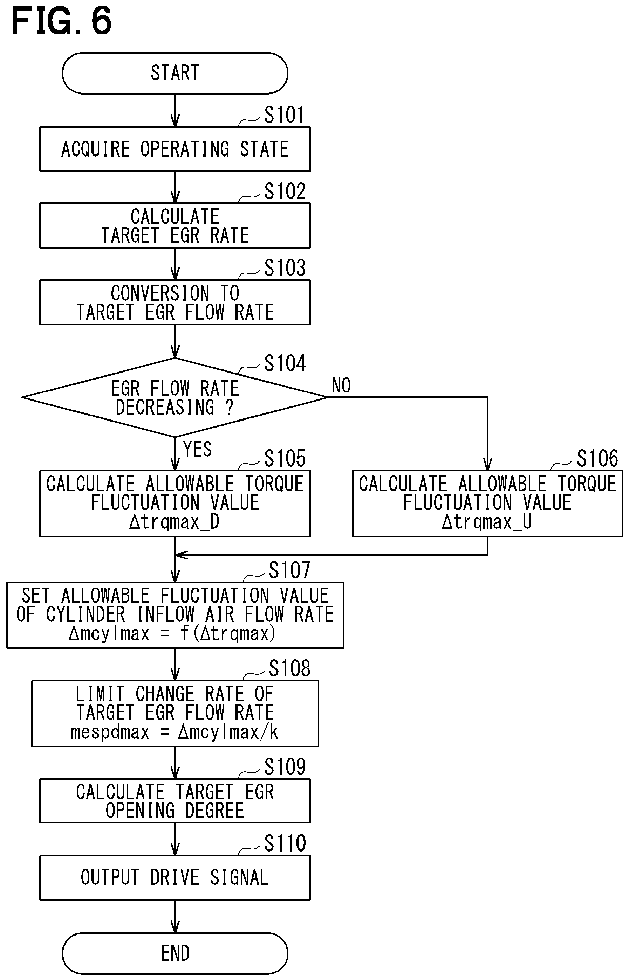

FIG. 6 is a flowchart of the procedure of the EGR control. This process is repeatedly performed by the ECU 50 at predetermined time intervals, for example.

In FIG. 6, in step S101, engine operating states such as an engine speed, filling efficiency, and coolant temperature are acquired. Thereafter, in step S102, a target EGR rate is calculated based on the engine operating state (corresponding to the target EGR rate calculation unit 61). Specifically, for example, a predetermined control map or equation is used to calculate the target EGR rate based on the engine speed and the filling efficiency. The filling efficiency may be an actual filling efficiency or a target filling efficiency. At such time, it is determined whether or not the conditions for performing EGR are satisfied, and when the conditions for performing EGR are satisfied, the target EGR rate is calculated based on the engine operating state as described above. The condition for performing EGR may be any condition that is determined based on the engine operating state. For example, when the temperature of the coolant of the engine 11 is equal to or higher than a predetermined temperature, that is, when the engine 11 is not in a cold state, it may be determined that the condition for performing EGR is satisfied. When the conditions for performing EGR are not satisfied, the target EGR rate is set to 0%.

Thereafter, in step S103, the target EGR rate is converted into a target EGR flow rate to calculate a target EGR flow rate base value meb (corresponding to the target EGR flow rate conversion unit 62). At such time, the target EGR flow rate base value meb is calculated as an EGR flow rate that should pass through the EGR valve 42 in order to achieve the target EGR rate.

Thereafter, in step S104, it is determined as a situation whether or not the EGR gas flow rate decreases (corresponding to the increase-decrease determination unit 65). When it is determined as a situation in which the EGR gas flow rate decreases, the result of step S104 is affirmative and the process proceeds to step S105, and when it is determined as a situation in which the EGR gas flow rate increases, the result of step S104 is negative and the process proceeds to step S106.

In step S105, the allowable torque fluctuation value Δtrqmax_D when the EGR gas decreases is calculated. In step S106, the allowable torque fluctuation value Δtrqmax_U when the EGR gas increases is calculated. As described above, the allowable torque fluctuation values Δtrqmax_D and Δtrqmax_U have the relationship "Δtrqmax_D > Δtrqmax_U."

Thereafter, in step S107, the allowable fluctuation value Δmcylmax of the cylinder inflow air flow rate is set based on the allowable torque fluctuation value Δtrqmax calculated in either step S105 or S106 (corresponding to the allowable fluctuation value setting unit 64).

In step S108, the limit rate mespdmax is set based on the allowable fluctuation value Δmcylmax of the cylinder inflow air flow rate (corresponding to the change rate limiting unit 63). At such time, the limit rate mespdmax is set using the above-described equation (2). Further, the current value of the target EGR flow rate me is calculated by limiting the target EGR flow rate base value meb by the limit rate mespdmax.

In step S109, a target EGR opening degree and the like for controlling the EGR valve 42 to a target state are calculated based on the target EGR flow rate me (corresponding to the EGR control unit 53).

In step S110, a drive signal set based on the target EGR opening degree is output to control the EGR valve 42 (corresponding to the EGR valve drive unit 54).

It is possible to achieve the following excellent effects according to the present embodiment described in detail.

The allowable fluctuation value Δmcylmax of the cylinder inflow air flow rate is configured to be set by calculating backward from the allowable torque fluctuation value Δtrqmax, which is the upper limit value of the torque fluctuation amount of the engine 11. In such manner, a limit on the change rate of the target EGR flow rate me calculated based on the engine operating state is imposed, thereby keeping the torque fluctuation amount of the engine 11 within an allowable range. In other words, steep changes in the amount of air flowing into the cylinder are suppressed, and torque fluctuations are suppressible. As a result, in an EGR system in which EGR gas is recirculated to the branch intake passage of each cylinder, appropriate EGR control can be achieved even when the EGR gas flow rate fluctuates.

The allowable torque fluctuation value Δmcylmax is set to a smaller value as the reduction ratio of the transmission 13 increases. In such manner, torque suppression in the vehicle 10 is more appropriately performable.

When it is determined as a situation in which the EGR gas flow rate decreases, the allowable fluctuation value Δmcylmax of the cylinder inflow air flow rate is set to a greater value by setting a greater value of the allowable torque fluctuation value Δtrqmax, than when it is determined as a situation in which the EGR gas flow rate increases. That is, when the EGR gas flow rate decreases, the limit on the change rate of the target EGR flow rate is made looser than when the EGR gas flow rate increases. In such manner, it is possible to suppress misfires in the engine 11 caused by an excessively slow decrease in the EGR gas flow rate when, for example, the amount of fresh air decreases as the opening degree of the throttle valve 26 decreases during vehicle deceleration. Therefore, there is no longer a trade-off between (a) suppressing fluctuations in the cylinder inflow air flow rate due to steep changes in the EGR gas flow rate and (b) suppressing EGR misfires, and it is possible to achieve both at a high level.

Another embodiment, which is a partial modification of the first embodiment, will be described in the following, focusing on the differences from the first embodiment.

### (Second Embodiment)

In the present embodiment, the difference from the above-described first embodiment is that the allowable fluctuation value setting unit 64 sets the allowable fluctuation value Δmcylmax of the cylinder inflow air flow rate regarding the air taken into the cylinder by calculating backward from an allowable fresh air fluctuation value Δgnmax, which is an upper limit value of a fresh air fluctuation amount regarding fresh air taken into the cylinder during one intake stroke of the engine 11.

Specifically, the allowable fluctuation value setting unit 64 uses the following equation (3) to set the allowable fluctuation value Δmcylmax based on the allowable fresh air fluctuation value Δgnmax. $Δ mcylmax = h \left(Δgnmax\right) = Δ gnmax \times Ncyl \times Ne / \left(2\times 60\right)$ (3)

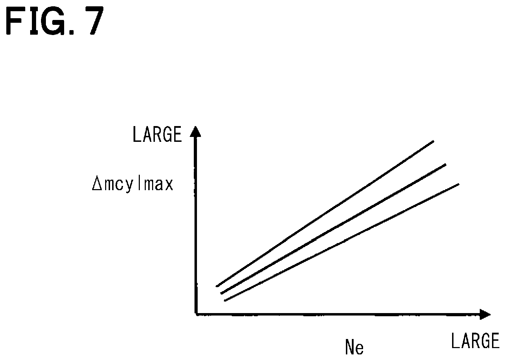

In equation (3), Ncyl is the number of cylinders of the engine 11, and Ne is the engine speed [rpm]. The allowable fluctuation value Δmcylmax of the cylinder inflow air flow rate may be set based on the engine speed Ne and the allowable fresh air fluctuation value Δgnmax using the relationship shown in FIG. 7, for example. Note that, in FIG. 7, the allowable fresh air fluctuation value Δgnmax is a predetermined value. Multiple values may be defined as the allowable fresh air fluctuation value Δgnmax. For example, the allowable fresh air fluctuation value Δgnmax may be changeable based on the vehicle travel state, etc., and may have a smaller value as the reduction ratio of the transmission 13 increases.

The allowable fluctuation value setting unit 64 can also use the fluctuation amount of a value correlated with the fluctuation amount of fresh air taken into the cylinder during one intake stroke of the engine 11, and can set the allowable fluctuation value Δmcylmax of the cylinder inflow air flow rate by calculating backward from the allowable fresh air fluctuation value Δgnmax corresponding to such correlation value.

Further, when it is determined as a situation in which the EGR gas flow rate decreases, the allowable fluctuation value setting unit 64 may set the allowable fresh air fluctuation value Δgnmax to a greater value than when it is determined as a situation in which the EGR gas flow rate increases.

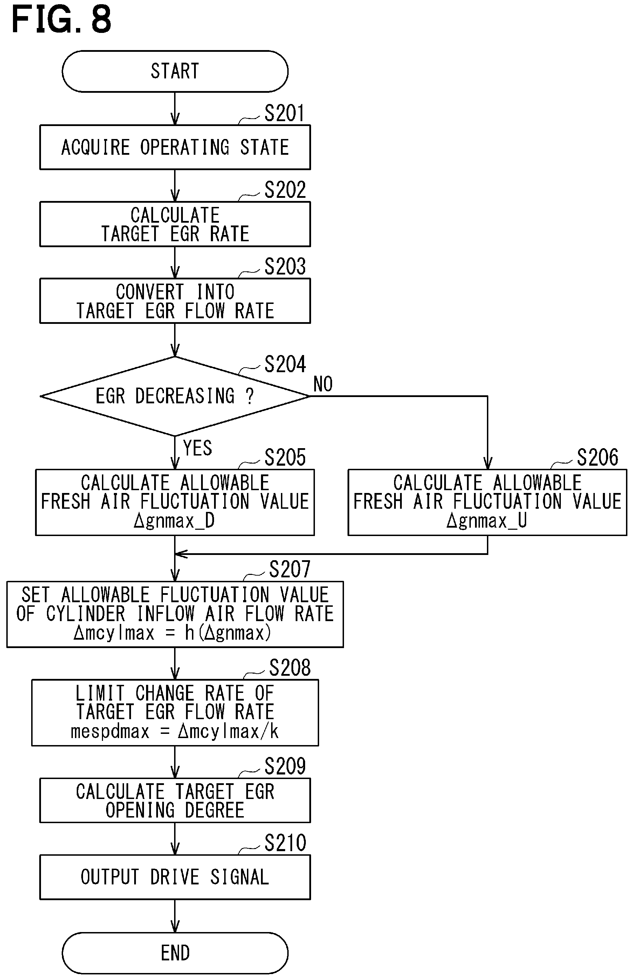

FIG. 8 is a flowchart of the procedure of the EGR control. This process replaces the process of FIG. 6, and is repeatedly performed by the ECU 50 at predetermined time intervals, for example.

In FIG. 8, in step S201, engine operating states such as an engine speed, filling efficiency, and coolant temperature are acquired, and in step S202, a target EGR rate is calculated based on the engine operating states. Further, in step S203, the target EGR rate is converted into a target EGR flow rate to calculate a target EGR flow rate base value meb. These processes are similar to steps S101 to S103 in FIG. 6.

Thereafter, in step S204, it is determined as a situation whether or not the EGR gas flow rate decreases. When it is determined as a situation in which the EGR gas flow rate decreases, the result of step S204 is affirmative and the process proceeds to step S205, and when it is determined as a situation in which the EGR gas flow rate increases, the result of step S204 is negative and the process proceeds to step S206.

In step S205, the allowable fresh air fluctuation value Δgnmax_D when the EGR gas decreases is calculated. In step S206, the allowable fresh air fluctuation value Δgnmax_U when the EGR gas is increased is calculated. As described above, the allowable fresh air fluctuation values Δgnmax_D and Δgnmax_U have the relationship "Δgnmax_D > Δgnmax_U."

Thereafter, in step S207, the allowable fluctuation value Δmcylmax of the cylinder inflow air flow rate is set based on the allowable fresh air fluctuation value Δgnmax calculated in either step S205 or S206.

Thereafter, in steps S208 to S210, the same processes as in steps S108 to S110 in FIG. 6 are performed. That is, in step S208, the limit rate mespdmax is set based on the allowable fluctuation value Δmcylmax of the cylinder inflow air flow rate, and the current value of the target EGR flow rate me is calculated by limiting the flow rate using the limit rate mespdmax. In step S209, a target EGR opening degree and the like for controlling the EGR valve 42 to a target state are calculated based on the target EGR flow rate me. In step S210, a drive signal set based on the target EGR opening degree is output to control the EGR valve 42.

According to the present embodiment, the allowable fluctuation value Δmcylmax of the cylinder inflow air flow rate regarding the air taken into the cylinder is set by calculating backward from the allowable fresh air fluctuation value Δgnmax, which is the upper limit value of the fluctuation amount regarding the amount of fresh air taken into the cylinder during one intake stroke in the engine 11. In such case, taking into consideration that a combustion torque of the engine 11 is approximately proportional to the amount of fresh air taken into the cylinder per one intake stroke, appropriate EGR gas control is performable while keeping the fluctuation amount of fresh air taken into the engine 11 within an allowable range.

Further, when it is determined as a situation in which the EGR gas flow rate decreases, the allowable fresh air fluctuation value Δgnmax is set to a greater value, and the allowable fluctuation value Δmcylmax of the cylinder inflow air flow rate regarding the air taken into the cylinder is set, compared to when it is determined as a situation in which the EGR gas flow rate increases. In such manner, it is possible to suppress misfires in the engine 11 caused by an excessively slow decrease in the EGR gas flow rate when, for example, the amount of fresh air decreases as the opening degree of the throttle valve 26 decreases during vehicle deceleration.

### (Third Embodiment)

On the intake side of the engine 11, a filling delay occurs when air that has passed through the throttle valve 26 fills the intake manifold 22, and a fluctuation amount Δmcyl in the cylinder inflow air flow rate when the EGR gas flow rate changes is approximately determined as a product of the change rate of the EGR gas flow rate and a filling delay time constant τ. Therefore, the fluctuation amount Δmcyl in the cylinder inflow air flow rate is affected by the filling delay time constant τ. Further, since the filling delay time constant τ changes depending on the operating state of the engine 11, the fluctuation amount Δmcyl in the cylinder inflow air flow rate changes depending on the operating state of the engine.

Therefore, in the present embodiment, a filling delay time constant τ is set, which indicates the degree of filling delay when air passing through the throttle valve 26 fills the intake manifold 22, and the limit rate mespdmax is corrected based on such filling delay time constant τ.

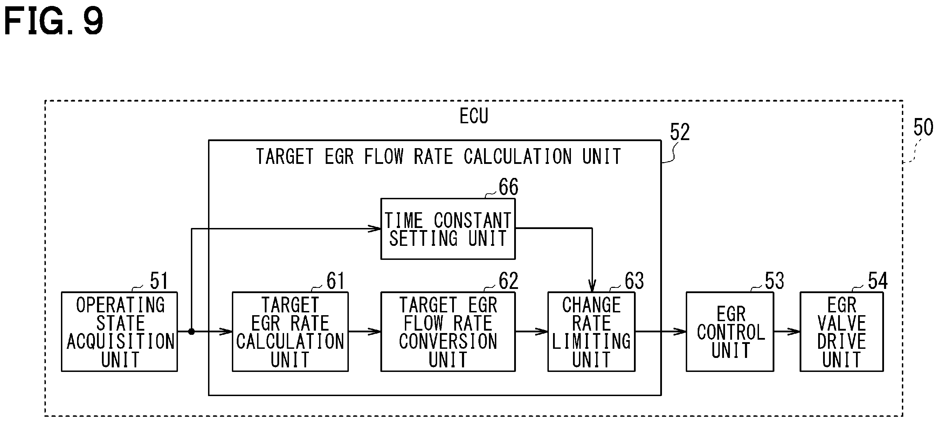

The configuration of the ECU 50 in the present embodiment is shown in FIG. 9. FIG. 9 is different from FIG. 1 in that the ECU 50 includes a time constant setting unit 66 instead of the allowable fluctuation value setting unit 64 and the increase-decrease determination unit 65. The time constant setting unit 66 sets the filling delay time constant τ based on the engine operating state. The change rate limiting unit 63 corrects the limit rate mespdmax of the target EGR flow rate me based on the filling delay time constant τ.

Specifically, the time constant setting unit 66 sets the filling delay time constant τ using the following equation (4). $τ = Vm \div \left(Vcyl/2\right) \div Veff \div \left(Ne/60\right)$ (4)

In equation (4), Vm is a volume of the intake manifold 22, Vcyl is an engine displacement, and Veff is a volumetric efficiency. The volumetric efficiency Veff may be calculated based on an intake air amount detected by the air flow meter 27 and the intake air temperature detected by an intake air temperature sensor (not shown). Further, the volumetric efficiency Veff may also be calculated based on phase detection values of the intake and exhaust side valve trains (VVT devices), the engine speed, and the like.

Further, the change rate limiting unit 63 calculates the limit rate mespdmax using the following equation (5). $mespdmax = mespdmax 0 \times τ 0 / τ$ (5)

In equation (5), mespdmax0 is a base speed limit value determined by adaptation, and τ0 is a filling delay time constant under the operating conditions when mespdmax0 is adapted.

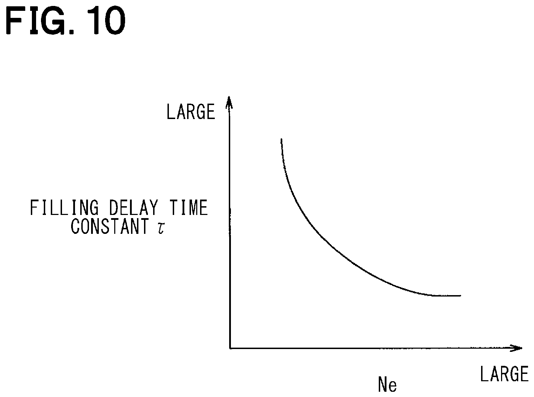

The filling delay time constant τ may be calculated by the following method. For example, the filling delay time constant τ may be calculated based on the engine speed Ne using a relationship shown in FIG. 10. The relationship in FIG. 10 may be defined by, for example, a table or a map. Further, the relationship shown in FIG. 10 may be such that the filling delay time constant τ is calculated based on the engine speed Ne and the volumetric efficiency. In any case, it is preferable that the filling delay time constant τ is calculated to become smaller as the engine speed Ne becomes larger and as the volumetric efficiency becomes larger.

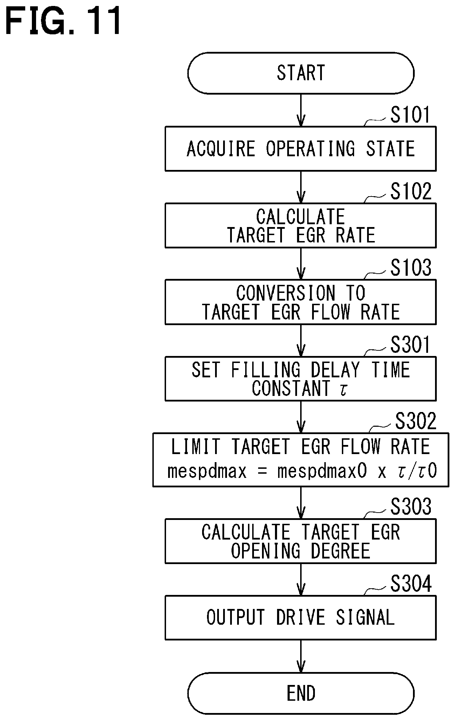

FIG. 11 is a flowchart of the procedure of the EGR control. This process replaces the process of FIG. 6, and is repeatedly performed by the ECU 50 at predetermined time intervals, for example. Note that, in FIG. 11, steps S101 to S103 are the same processes as those in FIG. 6.

In FIG. 11, after the target EGR flow rate base value meb is calculated in steps S101 to S103, the process proceeds to step S301. In step S301, the filling delay time constant τ is set by the above-described equation (4) (corresponding to the time constant setting unit 66).

In step S302, the limit rate mespdmax is set using the above-described equation (5), and the current value of the target EGR flow rate me is calculated by limiting the target EGR flow rate base value meb using the limit rate mespdmax (corresponding to the change rate limiting unit 63).

Thereafter, in step S303, a target EGR opening degree and the like for controlling the EGR valve 42 to a target state are calculated based on the target EGR flow rate me. In step S304, a drive signal set based on the target EGR opening degree is output to control the EGR valve 42.

As described above, according to the present embodiment, the limit rate mespdmax of the target EGR flow rate me is corrected by the filling delay time constant τ. In such manner, it is possible to realize appropriate EGR control while taking into consideration that the filling delay time constant τ to the intake manifold 22 changes depending on the engine operating state when the EGR gas flow rate changes.

The filling delay time constant τ of air for the intake manifold 22 is set based on the engine operating state. In such manner, the limit rate mespdmax determinable while taking into account that the filling delay time constant τ changes depending on the engine operating state, which is in other words, the fluctuation amount Δmcyl of the cylinder inflow air flow rate regarding the air taken into the cylinder can be kept within an allowable range in any operating range of the engine 11.

### (Other Embodiments)

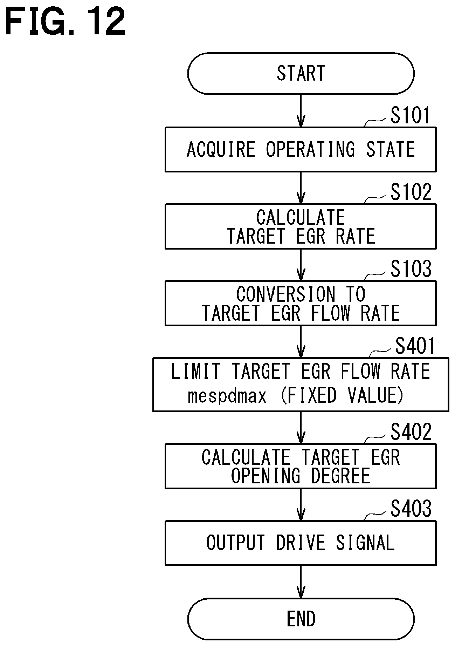

The above-described embodiments may be changed, for example, as follows.
· Regarding the EGR control performed by the ECU 50, other processing procedures will be described using the following flowcharts (FIGs. 12 to 15 and 17 to 21). In each of these drawings, steps S101 to S103 are the same processes as those in FIG. 6.

### (First Modified Example)

In the ECU 50, the change rate limiting unit 63 may be configured to set a predetermined fixed value as the limit rate mespdmax that limits the change rate of the target EGR flow rate. The process for realizing such configuration is shown in FIG. 12.

In FIG. 12, after the target EGR flow rate base value meb is calculated in steps S101 to S103, the process proceeds to step S401. In step S401, a predetermined limit rate mespdmax is used as a fixed value, and the current value of the target EGR flow rate me is calculated by limiting the target EGR flow rate base value meb.

Thereafter, in step S402, a target EGR opening degree and the like for controlling the EGR valve 42 to a target state are calculated based on the target EGR flow rate me. In step S403, a drive signal set based on the target EGR opening degree is output to control the EGR valve 42.

In the configuration of the present modified example, the change rate of the target EGR flow rate me is limited by a limit rate mespdmax that is predetermined as a fixed value. As a result, similar to the above, steep changes in the amount of air flowing into the cylinder are suppressed, and torque fluctuations are suppressible.

### (Second Modified Example)

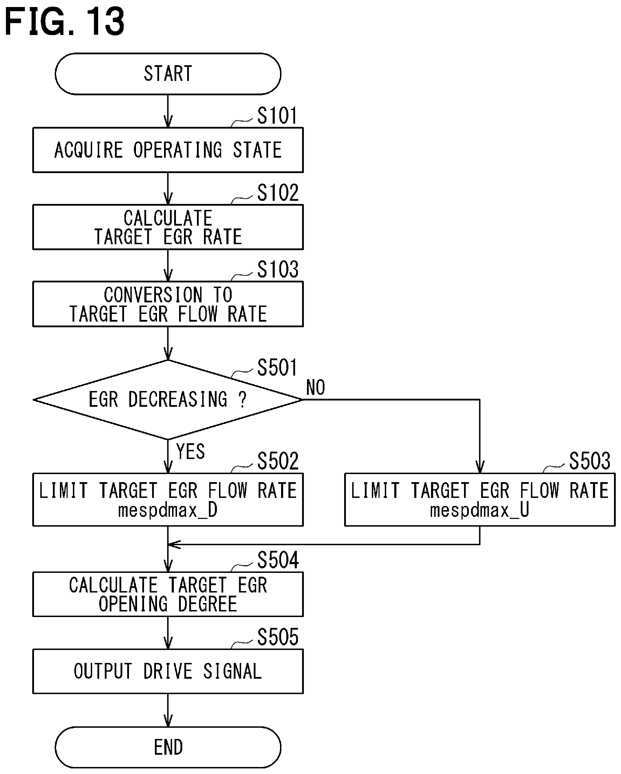

In the above-described first modified example, the limit rate mespdmax may be set to different values depending on whether the EGR gas flow rate increases or decreasing. The process for realizing such configuration is shown in FIG. 13.

In FIG. 13, after the target EGR flow rate base value meb is calculated in steps S101 to S103, the process proceeds to step S501. In step S501, it is determined as a situation whether the EGR gas flow rate decreases. When it is determined as a situation in which the EGR gas flow rate decreases, the process proceeds to step S502, and when it is determined as a situation in which the EGR gas flow rate increases, the process proceeds to step S503.

In step S502, the limit rate mespdmax_D when the EGR gas decreases is calculated. In step S503, the limit rate mespdmax_U when the EGR gas increases is calculated. These values have the relationship "limit rate mespdmax_D > limit rate mespdmax_U." In steps S502 and S503, either mespdmax_D or mespdmax_U is used as the limit rate, and the current value of the target EGR flow rate me is calculated by limiting the target EGR flow rate base value meb.

Thereafter, in step S504, a target EGR opening degree and the like for controlling the EGR valve 42 to a target state are calculated based on the target EGR flow rate me. In step S505, a drive signal set based on the target EGR opening degree is output to control the EGR valve 42.

In the configuration of the present modified example, when it is determined as a situation in which the EGR gas flow rate decreases, the limit rate mespdmax is set to a greater value than when it is determined as a situation in which the EGR gas flow rate increases. In such case, for example, when the amount of fresh air decreases as the opening degree of the throttle valve 26 decreases during vehicle deceleration, the restriction on the change rate of the target EGR flow rate is eased, and misfires in the engine 11 caused by the EGR gas flow rate decreasing too slowly is suppressible. In such manner, it is possible to achieve more appropriate EGR control when the EGR gas flow rate increases or decreases.

### (Third Modified Example)

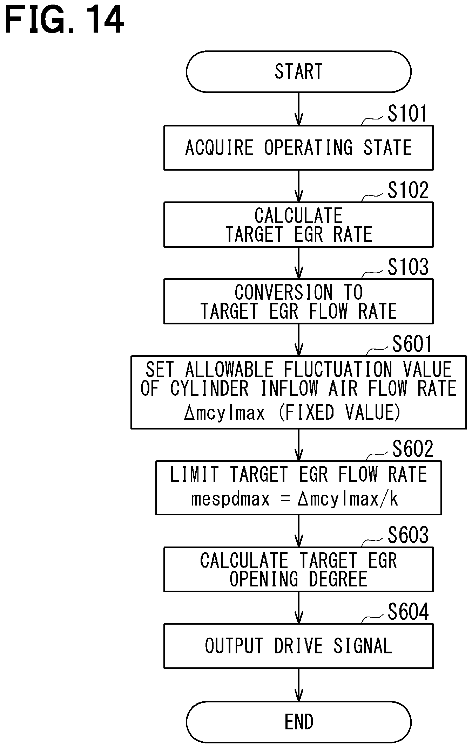

In the ECU 50, the allowable fluctuation value setting unit 64 may be configured to set a predetermined fixed value as the allowable fluctuation value Δmcylmax of the cylinder inflow air flow rate. The process for realizing such configuration is shown in FIG. 14.

In FIG. 14, after the target EGR flow rate base value meb is calculated in steps S101 to S103, the process proceeds to step S601. In step S601, the allowable fluctuation value Δmcylmax is acquired as a predetermined fixed value, and in the next step S602, the allowable fluctuation value Δmcylmax is divided by a predetermined constant k to calculate the limit rate mespdmax. Further, the current value of the target EGR flow rate me is calculated by limiting the target EGR flow rate base value meb using the limit rate mespdmax. As mentioned above, the constant k is preferably set as the intake manifold filling delay time constant under typical engine operating conditions.

Thereafter, in step S603, a target EGR opening degree and the like for controlling the EGR valve 42 to a target state are calculated based on the target EGR flow rate me. In step S604, a drive signal set based on the target EGR opening degree is output to control the EGR valve 42.

In the present modified example as well, when the target EGR flow rate me changes, the fluctuation amount Δmcyl of the cylinder inflow air flow rate can be limited to an allowable value or less (Δmcylmax or less). In such manner, excessive fluctuations in the flow rate of air taken into the cylinder is suppressible, thereby suppressing torque fluctuations of the engine 11.

### (Fourth Modified Example)

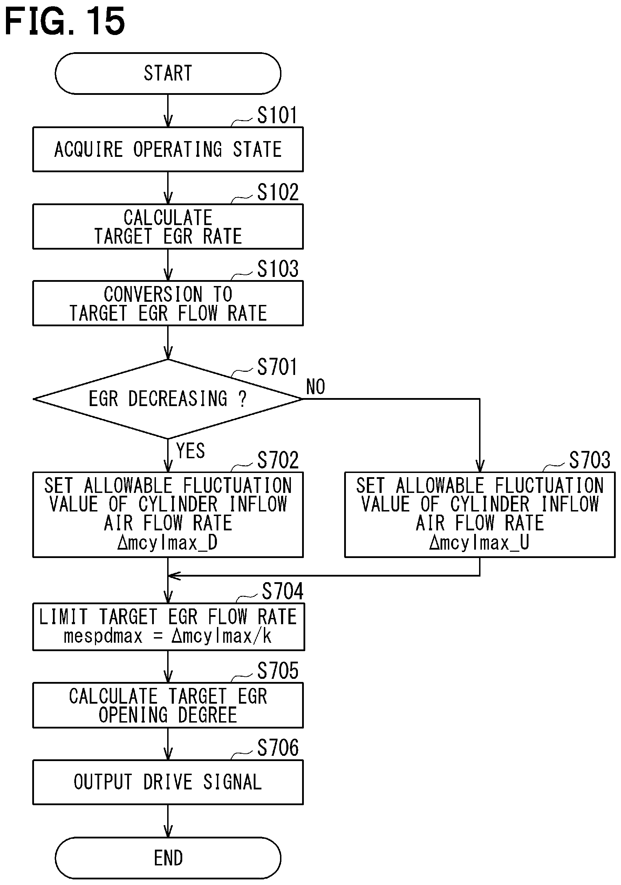

In the above-described third modified example, the allowable fluctuation value Δmcylmax of the cylinder inflow air flow rate may be set to different values depending on whether the EGR gas flow rate increases or decreasing. The process for realizing such configuration is shown in FIG. 15.

In FIG. 15, after the target EGR flow rate base value meb is calculated in steps S101 to S103, the process proceeds to step S701. In step S701, it is determined as a situation whether or not the EGR gas flow rate decreases. When it is determined as a situation in which the EGR gas flow rate decreases, the process proceeds to step S702, and when it is determined as a situation in which the EGR gas flow rate increases, the process proceeds to step S703.

In step S702, an allowable fluctuation value Δmcylmax_D of the cylinder inflow air flow rate when the EGR gas decreases is calculated. In step S703, an allowable fluctuation value Δmcylmax_U of the cylinder inflow air flow rate when the EGR gas increases is calculated. These values have a relationship of "Δmcylmax_D > Δmcylmax_U."

Then, in step S704, the allowable fluctuation value Δmcylmax calculated in either step S702 or S703 is divided by a predetermined constant k to calculate the limit rate mespdmax, and the current value of the target EGR flow rate me is calculated by limiting the target EGR flow rate base value meb using the limit rate mespdmax.

Thereafter, in step S705, a target EGR opening degree and the like for controlling the EGR valve 42 to a target state are calculated based on the target EGR flow rate me. In step S706, a drive signal set based on the target EGR opening degree is output to control the EGR valve 42.

In the configuration of the present modified example, when it is determined as a situation in which the EGR gas flow rate decreases, the allowable fluctuation value Δmcylmax of the cylinder inflow air flow rate is set to a greater value than when it is determined as a situation in which the EGR gas flow rate increases. In such case, for example, when the amount of fresh air decreases as the opening degree of the throttle valve 26 decreases during vehicle deceleration, the restriction on the change rate of the target EGR flow rate is eased, and misfires in the engine 11 caused by the EGR gas flow rate decreasing too slowly is suppressible. In such manner, it is possible to achieve more appropriate EGR control when the EGR gas flow rate increases or decreases.

### (Fifth Modified Example)

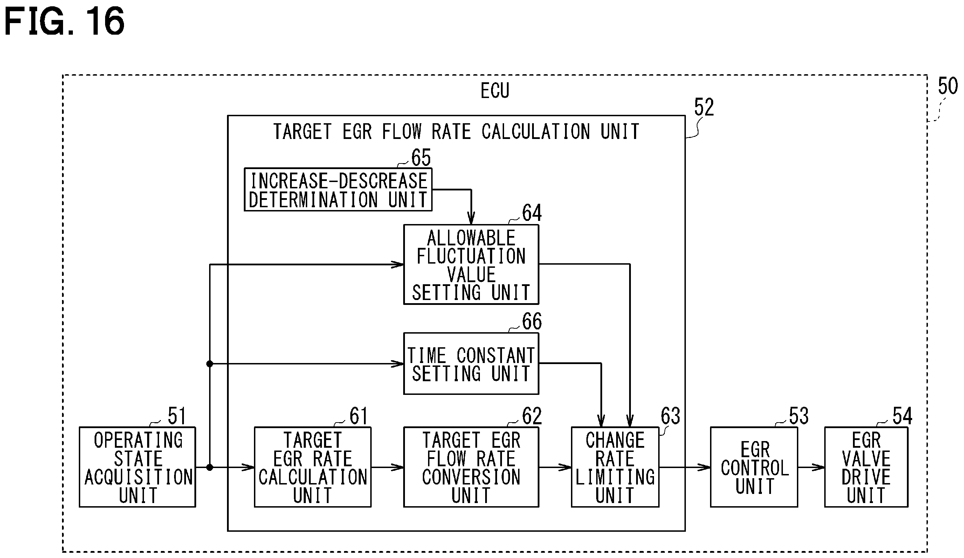

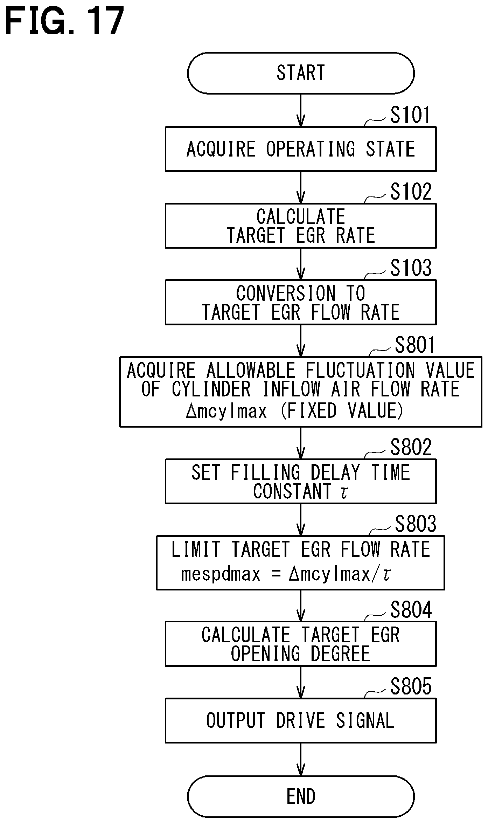

In the following fifth to tenth modified examples, as shown in FIG. 16, the ECU 50 includes the allowable fluctuation value setting unit 64 that sets the allowable fluctuation value Δmcylmax of the cylinder inflow air flow rate, and the time constant setting unit 66 that sets the filling delay time constant τ. Further, the ECU 50 includes the increase-decrease determination unit 65 that determines as a situation whether the EGR gas flow rate decreases or increases, as required. The change rate limiting unit 63 then sets the limit rate mespdmax based on the allowable fluctuation value Δmcylmax and the filling delay time constant τ. The process for realizing the configuration of the present modified example is shown in FIG. 17.

In FIG. 17, after the target EGR flow rate base value meb is calculated in steps S101 to S103, the process proceeds to step S801. In step S801, an allowable fluctuation value Δmcylmax is acquired as a predetermined fixed value, and in the next step S802, the filling delay time constant τ is set by the above-described equation (4). In step S803, the limit rate mespdmax is calculated by dividing the allowable fluctuation value Δmcylmax by the filling delay time constant τ, and the current value of the target EGR flow rate me is calculated by limiting the target EGR flow rate base value meb by the limit rate mespdmax.

Thereafter, in step S804, a target EGR opening degree and the like for controlling the EGR valve 42 to a target state are calculated based on the target EGR flow rate me. In step S805, a drive signal set based on the target EGR opening degree is output to control the EGR valve 42.

According to the configuration of the present modified example, by controlling the change rate of the target EGR flow rate using (a) the allowable fluctuation value Δmcylmax of the cylinder inflow air flow rate regarding the air taken into the cylinder and (b) the filling delay time constant τ, the fluctuation amount Δmcyl of the cylinder inflow air flow rate taken into the cylinder can be limited to be equal to or lower than the allowable value (Δmcylmax or less) when the target EGR flow rate changes. In such manner, excessive fluctuations in the flow rate of air taken into the cylinder is suppressible, thereby suppressing torque fluctuations of the engine 11.

### (Sixth Modified Example)

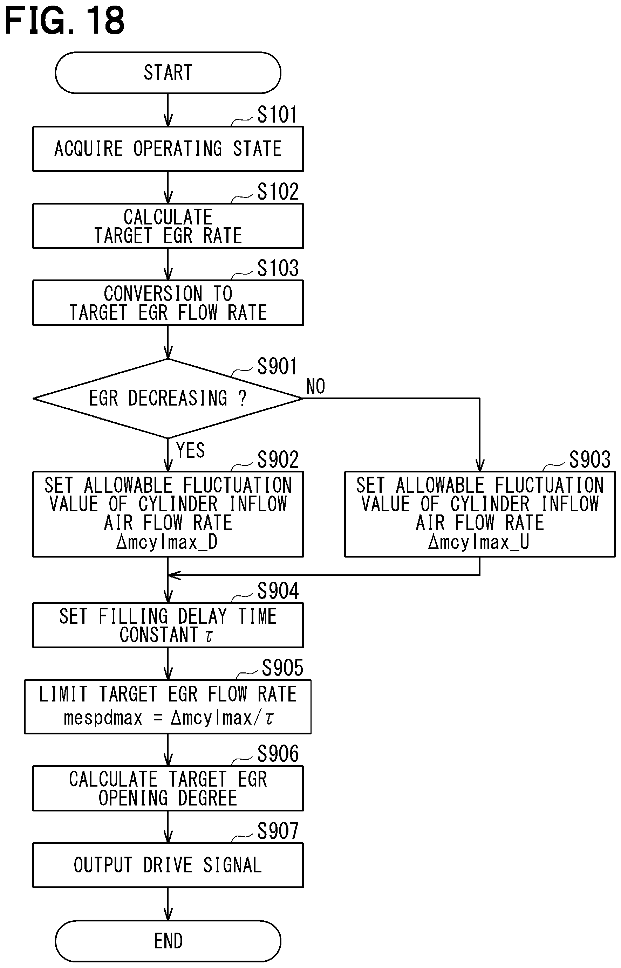

In the above-described fifth modified example, the allowable fluctuation value Δmcylmax of the cylinder inflow air flow rate may be set to different values depending on whether the EGR gas flow rate increases or decreasing. The process for realizing such configuration is shown in FIG. 18.

In FIG. 18, after the target EGR flow rate base value meb is calculated in steps S101 to S103, the process proceeds to step S901. In step S901, it is determined as a situation whether or not the EGR gas flow rate decreases. When it is determined as a situation in which the EGR gas flow rate decreases, the process proceeds to step S902, and when it is determined as a situation in which the EGR gas flow rate increases, the process proceeds to step S903.

In step S902, the allowable fluctuation value Δmcylmax_D of the cylinder inflow air flow rate when the EGR gas decreases is calculated. In step S903, the allowable fluctuation value Δmcylmax_U of the cylinder inflow air flow rate when the EGR gas is increased is calculated. These values have a relationship of "Δmcylmax_D > Δmcylmax_U."

Thereafter, in step S904, the filling delay time constant τ is set by the above-described equation (4). In step S905, the limit rate mespdmax is calculated by dividing the fluctuation allowable value Δmcylmax calculated in either step S902 or S903 by the filling delay time constant τ, and the current value of the target EGR flow rate me is calculated by limiting the target EGR flow rate base value meb using the limit rate mespdmax.

Thereafter, in step S906, a target EGR opening degree and the like for controlling the EGR valve 42 to a target state are calculated based on the target EGR flow rate me. In step S907, a drive signal set based on the target EGR opening degree is output to control the EGR valve 42.

According to the configuration of the present modified example, it is possible to achieve more appropriate EGR control when the EGR gas flow rate increases or decreases.

### (Seventh Modified Example)

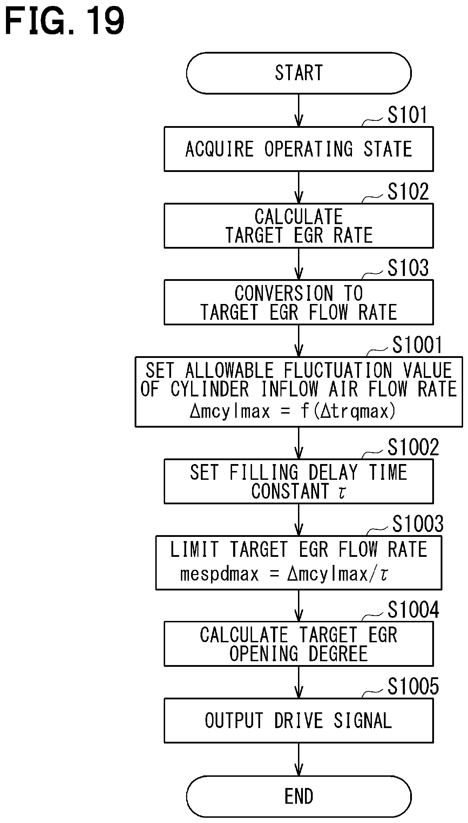

In the present modified example, the allowable fluctuation value setting unit 64 is configured to set the allowable fluctuation value Δmcylmax of the cylinder inflow air flow rate by calculating backward from the allowable torque fluctuation value Δtrqmax. The process for realizing such configuration is shown in FIG. 19.

In FIG. 19, after the target EGR flow rate base value meb is calculated in steps S101 to S103, the process proceeds to step S1001. In step S1001, the allowable fluctuation value Δmcylmax of the cylinder inflow air flow rate is set by calculating backward from the allowable torque fluctuation value Δtrqmax of the engine 11. In the next step S1002, the filling delay time constant τ is set by the above-described equation (4). In step S1003, the limit rate mespdmax is calculated by dividing the allowable fluctuation value Δmcylmax by the filling delay time constant τ, and the current value of the target EGR flow rate me is calculated by limiting the target EGR flow rate base value meb by the limit rate mespdmax.

Thereafter, in step S1004, a target EGR opening degree and the like for controlling the EGR valve 42 to a target state are calculated based on the target EGR flow rate me. In step S1005, a drive signal set based on the target EGR opening degree is output to control the EGR valve 42.

According to the configuration of the present modified example, by controlling the change rate of the target EGR flow rate using (i) the allowable fluctuation value Δmcylmax calculated from the allowable torque fluctuation value Δtrqmax of the engine 11 and (ii) the filling delay time constant τ, it is possible to achieve appropriate EGR control while limiting the torque fluctuation amount of the engine 11 to be equal to or lower than the allowable value (Δtrqmax or less) when the target EGR flow rate changes.

### (Eighth Modified Example)

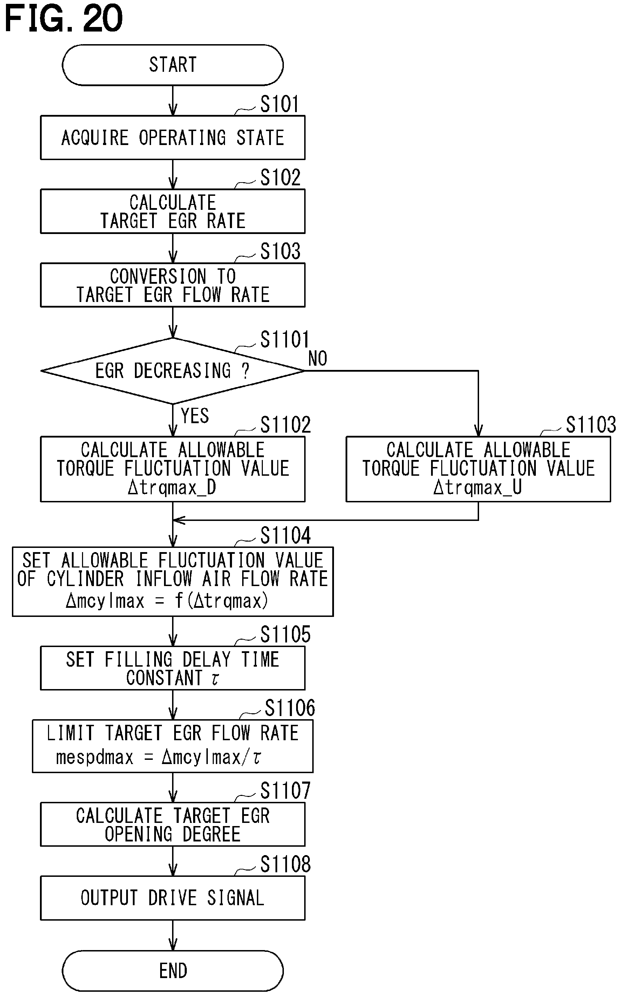

In the above-described seventh modified example, the allowable torque fluctuation value Δtrqmax may be set to different values depending on whether the EGR gas flow rate increases or decreasing. The process for realizing such configuration is shown in FIG. 20.

In FIG. 20, after the target EGR flow rate base value meb is calculated in steps S101 to S103, the process proceeds to step S1101. In step S1101, it is determined as a situation whether or not the EGR gas flow rate decreases. When it is determined as a situation in which the EGR gas flow rate decreases, the process proceeds to step S1102, and when it is determined as a situation in which the EGR gas flow rate increases, the process proceeds to step S1103.

In step S1102, the allowable torque fluctuation value Δtrqmax_D when the EGR gas decreases is calculated. In step S1103, the allowable torque fluctuation value Δtrqmax_U when the EGR gas increases is calculated. These values have a relationship of "Δtrqmax_D > Δtrqmax_U." In step S1104, the allowable fluctuation value Δmcylmax of the cylinder inflow air flow rate is set based on the allowable torque fluctuation value Δtrqmax calculated in either step S1102 or S1103.

Thereafter, in step S1105, the filling delay time constant τ is set by the above-described equation (4). In step S1106, the limit rate mespdmax is calculated by dividing the allowable fluctuation value Δmcylmax by the filling delay time constant τ, and the current value of the target EGR flow rate me is calculated by limiting the target EGR flow rate base value meb using the limit rate mespdmax.

Thereafter, in step S1107, a target EGR opening degree and the like for controlling the EGR valve 42 to a target state are calculated based on the target EGR flow rate me. In step S1108, a drive signal set based on the target EGR opening degree is output to control the EGR valve 42.

According to the configuration of the present modified example, it is possible to achieve more appropriate EGR control when the EGR gas flow rate increases or decreases.

### (Ninth Modified Example)

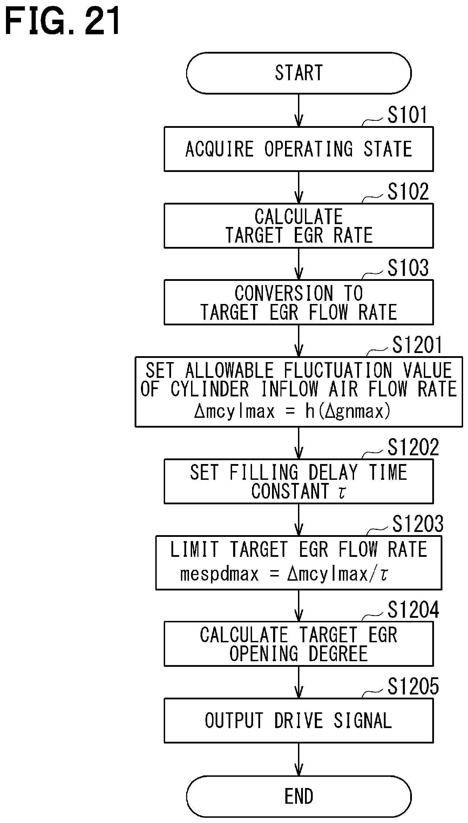

In the present modified example, the allowable fluctuation value setting unit 64 is configured to set the allowable fluctuation value Δmcylmax of the cylinder inflow air flow rate by calculating backward from the allowable fresh air fluctuation value Δgnmax. The process for realizing such configuration is shown in FIG. 21.

In FIG. 21, after the target EGR flow rate base value meb is calculated in steps S101 to S103, the process proceeds to step S1201. In step S1201, the allowable fluctuation value Δmcylmax of the cylinder inflow air flow rate is set by calculating backward from the allowable fresh air fluctuation value Δgnmax of the engine 11. In the next step S1202, the filling delay time constant τ is set by the above-described equation (4). In step S1203, the limit rate mespdmax is calculated by dividing the allowable fluctuation value Δmcylmax by the filling delay time constant τ, and the current value of the target EGR flow rate me is calculated by limiting the target EGR flow rate base value meb using the limit rate mespdmax.

Thereafter, in step S1204, a target EGR opening degree and the like for controlling the EGR valve 42 to a target state are calculated based on the target EGR flow rate me. In step S1205, a drive signal set based on the target EGR opening degree is output to control the EGR valve 42.

According to the configuration of the present modified example, by controlling the change rate of the target EGR flow rate using (i) the allowable fluctuation value Δmcylmax calculated from the allowable fresh air fluctuation value Δgnmax of the engine 11 and (ii) the filling delay time constant τ, when the target EGR flow rate changes, it is possible to achieve appropriate EGR control by limiting the amount of fresh air fluctuation amount of the engine 11 to be equal to or lower than the allowable value (Δgnmax or less).

### (Tenth Modified Example)

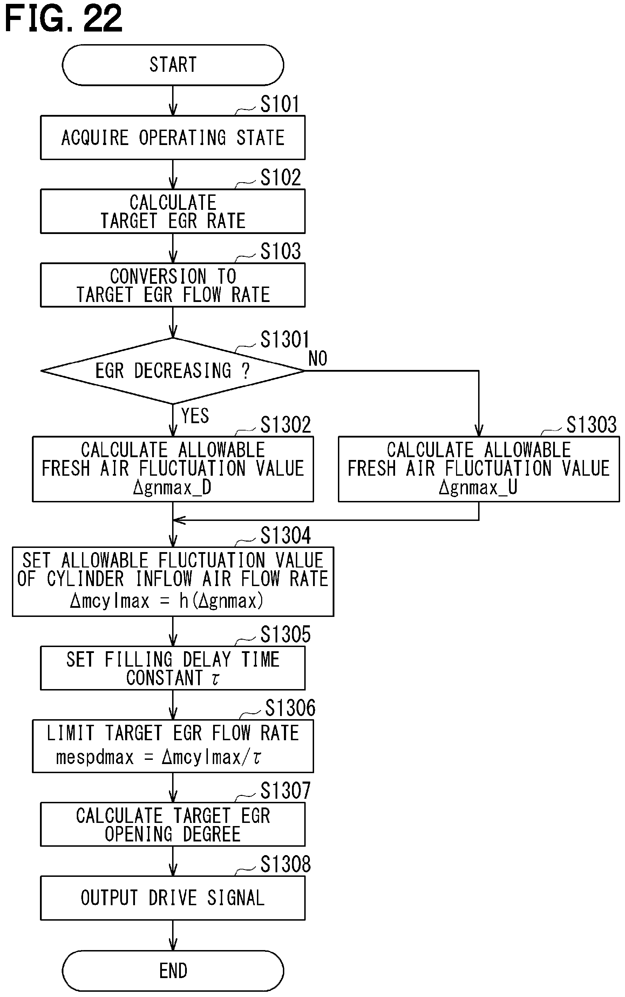

In the above-described ninth modified example, the allowable fresh air fluctuation value Δgnmax may be set to different values when the EGR gas flow rate increases and decreasing. The process for realizing such configuration is shown in FIG. 22.

In FIG. 22, after the target EGR flow rate base value meb is calculated in steps S101 to S103, the process proceeds to step S1301. In step S1301, it is determined as a situation whether the EGR gas flow rate decreases. When it is determined as a situation in which the EGR gas flow rate decreases, the process proceeds to step S1302, and when it is determined as a situation in which the EGR gas flow rate increases, the process proceeds to step S1303.

In step S1302, the allowable fresh air fluctuation value Δgnmax_D when the EGR gas decreases is calculated. In step S1303, the allowable fresh air fluctuation value Δgnmax_U when the EGR gas increases is calculated. These values have the relationship "Δgnmax_D > Δgnmax_U." In step S1304, the allowable fluctuation value Δmcylmax of the cylinder inflow air flow rate is set based on the allowable fresh air fluctuation value Δgnmax calculated in either step S1302 or S1303.

Thereafter, in step S1305, the filling delay time constant τ is set by the above-described equation (4). In step S1306, the limit rate mespdmax is calculated by dividing the allowable fluctuation value Δmcylmax by the filling delay time constant τ, and the current value of the target EGR flow rate me is calculated by limiting the target EGR flow rate base value meb using the limit rate mespdmax.

Thereafter, in step S1307, a target EGR opening degree and the like for controlling the EGR valve 42 to a target state are calculated based on the target EGR flow rate me. In step S1308, a drive signal set based on the target EGR opening degree is output to control the EGR valve 42.

According to the configuration of the present modified example, it is possible to achieve more appropriate EGR control when the EGR gas flow rate increases or decreases.

In the above embodiment, the target EGR rate is calculated based on the engine operating state, and the target EGR flow rate is calculated based on the target EGR rate (see FIG. 1). However, such a configuration may be changed. For example, a map defining the relationship between the engine operating state (NE, load factor) and the target EGR flow rate may be prepared, and the target EGR flow rate may be calculated based on the engine operating state using the map.

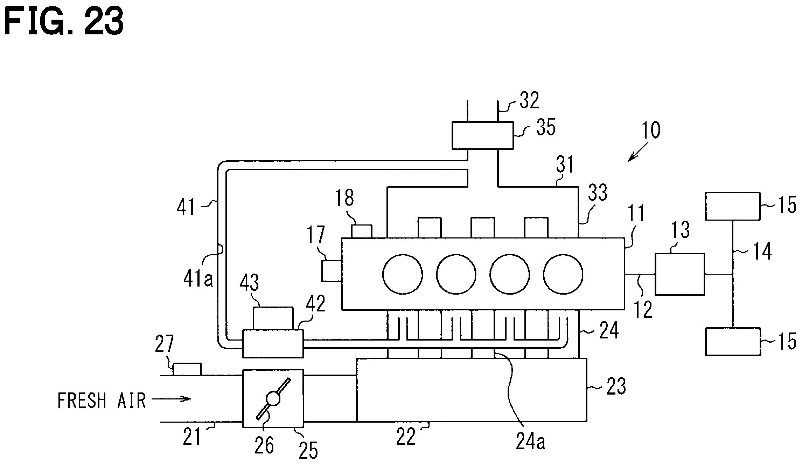

In the EGR system of the above embodiments, an exhaust side end of the EGR pipe 41 is configured to be connected to a downstream side of the exhaust purification device 35 in the exhaust pipe 32 (see FIG. 1). However, such configuration may be changed. For example, as shown in FIG. 23, the exhaust side end of the EGR pipe 41 may be connected to an upstream side of the exhaust purification device 35 in the exhaust pipe 32.

In the above-described embodiments, the engine 11 is a gasoline engine. However, the engine 11 may be any other type of engine. For example, the engine may be a gas engine that uses CNG or hydrogen gas as fuel, or a diesel engine that uses diesel as fuel.

The control device and the method thereof described in the present disclosure may be implemented by a dedicated computer including a processor programmed to perform multiple functions embodied by a computer program and a memory. Alternatively, the control device and the method described in the present disclosure may be implemented by a dedicated computer provided by forming a processor with one or more dedicated hardware logic circuits. Alternatively, the control device and the method described in the present disclosure may be implemented by one or more dedicated computers configured as a combination of (i) a processor programmed to execute one or multiple functions and a memory and (ii) a processor including one or more hardware logic circuits. The computer program may be stored on a computer-readable, non-transitory, tangible storage medium as instructions executed by a computer.

## Claims

1. An EGR control device applicable to an EGR system for an internal combustion engine (11), the EGR system including i) an EGR passage (41a) configured to recirculate a part of exhaust gas, which is discharged from a combustion chamber (16) of each of multiple cylinders in the internal combustion engine, to a branch intake passage (24a) provided for each of the cylinders and communicating with the combustion chamber, and ii) an EGR valve (42) configured to adjust an amount of EGR gas flowing through the EGR passage,
the EGR control device comprising:
a target EGR flow rate calculation unit (52) configured to calculate, as a target EGR flow rate, a target value of an EGR gas flow rate of EGR gas flowing into the cylinders based on an operating state of the internal combustion engine; and
an EGR control unit (53) configured to control an opening degree of the EGR valve based on the target EGR flow rate, wherein
the target EGR flow rate calculation unit includes a change rate limiting unit (63) configured to limit a change rate of the target EGR flow rate.

2. The EGR control device according to claim 1 further comprising:
an allowable fluctuation value setting unit (64) configured to set an allowable fluctuation value (Δmcylmax) that is an upper limit value of a fluctuation amount in a cylinder inflow air flow rate that accompanies change in the EGR gas flow rate, wherein
the change rate limiting unit is configured to set a limit rate (mespdmax) that is a limit value of a change rate of the target EGR flow rate based on the allowable fluctuation value.

3. The EGR control device according to claim 2, further comprising:
an increase-decrease determination unit (65) configured to determine whether the EGR gas flow rate decreases or increases, wherein
the allowable fluctuation value setting unit is configured to set the allowable fluctuation value to a greater value when it is determined that the EGR gas flow rate decreases than when it is determined that the EGR gas flow rate increases.

4. The EGR control device according to claim 2, wherein
the allowable fluctuation value setting unit is configured to set the allowable fluctuation value of the cylinder inflow air flow rate by calculating backward from an allowable torque fluctuation value (Δtrqmax) that is an upper limit value of a torque fluctuation amount of the internal combustion engine.

5. The EGR control device according to claim 4, wherein
the internal combustion engine is mounted on a vehicle, in which an output shaft of the internal combustion engine is connected to a transmission (13), and
the allowable fluctuation value setting unit is configured to set the allowable fluctuation value of the cylinder inflow air flow rate, such that the allowable torque fluctuation value is set to a smaller value as a reduction ratio of the transmission becomes higher.

6. The EGR control device according to claim 4 or 5, further comprising:
an increase-decrease determination unit (65) configured to determine whether the EGR gas flow rate decreases or increases, wherein
the allowable fluctuation value setting unit is configured to set the allowable torque fluctuation value to a greater value when the EGR gas flow rate is determined to decrease, compared to when the EGR gas flow rate is determined to increase.

7. The EGR control device according to any one of claims 2 to 6, wherein
the allowable fluctuation value setting unit is configured to set the allowable fluctuation value of the cylinder inflow air flow rate by calculating backward from an allowable fresh air fluctuation value (Δgnmax) that is an upper limit value of a fresh air fluctuation amount of fresh air taken into the cylinder during one intake stroke of the internal combustion engine.

8. The EGR control device according to claim 7, further comprising:
an increase-decrease determination unit (65) configured to determine whether the EGR gas flow rate decreases or increases, wherein
the allowable fluctuation value setting unit is configured to set the allowable fluctuation value of the cylinder inflow air flow rate such that the allowable fresh air fluctuation value is set to a greater value when the EGR gas flow rate is determined to decrease than when the EGR gas flow rate is determined to increase.

9. The EGR control device according to any one of claims 2 to 8, wherein
the internal combustion engine is provided with, on an intake side of the internal combustion engine, i) an intake manifold (22) including a surge tank (23) configured to collect the branch intake passages at an upstream of the branch intake passages and ii) a throttle valve (26) provided at an upstream of the intake manifold and configured to adjust an amount of air,
the EGR control device, further comprising:
a time constant setting unit (66) configured to set a filling delay time constant that indicates a degree of filling delay when air is filled in the intake manifold through the throttle valve, wherein
the change rate limiting unit is configured to set the limit rate based on the allowable fluctuation value and the filling delay time constant.

10. The EGR control device according to any one of claims 1 to 9, wherein
the internal combustion engine is provided with, on an intake side of the internal combustion engine, i) an intake manifold (22) including a surge tank (23) configured to collect the branch intake passages at an upstream of the branch intake passages and ii) a throttle valve (26) provided at an upstream of the intake manifold and configured to adjust an amount of air,
the EGR control device, further comprising:
a time constant setting unit (66) configured to set a filling delay time constant that indicates a degree of filling delay when air is filled in the intake manifold through the throttle valve, wherein
the change rate limiting unit is configured to correct a limit rate (mespdmax) that is a limit value of the change rate of the target EGR flow rate base on the filling delay time constant.

11. The EGR control device according to any one of claims 1 to 10, further comprising:
an increase-decrease determination unit (65) configured to determine whether the EGR gas flow rate decreases or increases, wherein
the change rate limiting unit is configured to set a limit rate (mespdmax), which is a limit value of the change rate of the target EGR flow rate, to a greater value when the EGR gas flow rate is determined to decrease, than when the EGR gas flow rate is determined to increase.

12. A program applicable to an EGR system for an internal combustion engine (11), the EGR system including i) an EGR passage (41a) configured to recirculate a part of exhaust gas, which is discharged from a combustion chamber (16) of each of multiple cylinders in the internal combustion engine, to a branch intake passage (24a) provided for each of the cylinders and communicating with the combustion chamber, and ii) an EGR valve (42) configured to adjust an amount of EGR gas flowing through the EGR passage, the program comprising instructions configured to, when executed by a computer, cause the computer to implement:
a target EGR flow rate calculation process to calculate, as a target EGR flow rate, a target value of an EGR gas flow rate of EGR gas flowing into the cylinders based on an operating state of the internal combustion engine; and
an EGR control process to control an opening degree of the EGR valve based on the target EGR flow rate, wherein
the target EGR flow rate calculation process includes a change rate limiting process to limit a change rate of the target EGR flow rate.
